# EUROPEAN PATENT APPLICATION

(11) **EP 1 705 587 A2**
(43) Date of publication of application: **27.09.2006**
(21) Application number: 06251547.3
(22) Date of filing: 23.03.2006
(51) Int. Cl.: G06F 17/30

(54) **Information providing method, information providing apparatus, program for information providing method, and recording medium storing program for information providing method**

(30) Priority: 24.03.2005 JP 2005085131
(71) Applicant: SONY CORPORATION, Tokyo 141 (JP)
(72) Inventor: Murakoshi, Sho c/o Sony Corporation, Tokyo 141 (JP)
(74) Representative: Keston, Susan Elizabeth

(57) **Abstract**

An information providing method for accessing a recording unit and providing information recorded on the recording unit includes the steps of detecting an oldness standard indicating oldness of the information, and providing the information to a user according to a setting based on the detected oldness standard so that the user can perceive the oldness of the information.

## Description

The present invention relates to information providing methods, information providing apparatuses, programs for information providing methods, and recording media storing programs for information providing methods.

With the recent dramatic increase in the recording capacity of recording media, in apparatuses for recording and playing back various files, a variety of methods for managing the files recorded on recording media have been designed. For example, electronic still cameras are designed to create folder and file names using the image capturing dates to manage image files based on the folder and file names. Computers are provided with a function for recording the file names of files using a file managing system and for searching for a desired file based on the recorded file name by using the file managing system.

For example, Japanese Unexamined Patent Application Publication No. 2001-75995 discloses a file management method in which a generation history of an image file is recorded and the generation history is searched for using time information. Another proposed method is to provide a thumbnail index image or an intro of music to a user to help the user retrieve a desired file.

Generally, prints of film photographs become old by fading away over time or the like, and users recognize old photographs taken long ago due to the oldness. Thus, the users are able to intuitively find, for example, a photograph of memories from a large number of scenic photographs.

It would be convenient to intuitively perceive oldness of various files and content recorded on recording media.

It is therefore desirable to provide an information providing method and apparatus for enabling a user to intuitively perceive oldness, a program for the information providing method, and a recording medium storing the program for the information providing method.

Various respective aspects and features of the invention are defined in the appended claims. Features from the dependent claims may be combined with features of the independent claims as appropriate and not merely as explicitly set out in the claims.

Embodiments of the present invention can be used for example in the management of files, such as image files, on computers. Embodiments of the present invention relate to an arrangement for detecting an oldness standard indicating oldness of information, such as the file creation date, and providing the information to a user so that older information is perceived to be older based on the oldness standard, whereby the user can intuitively perceive the oldness.

According to an embodiment of the present invention, an information providing method for accessing recording means and providing information recorded on the recording means includes the steps of detecting an oldness standard indicating oldness of the information, and providing the information to a user according to a setting based on the detected oldness standard so that the user can perceive the oldness of the information.

According to another embodiment of the present invention, an information providing apparatus for accessing recording means and providing information recorded on the recording means includes a standard detecting unit that detects an oldness standard indicating oldness of the information, and an information providing unit that provides the information to a user according to a setting based on the oldness standard detected by the standard detecting unit so that the user can perceive the oldness of the information.

According to still another embodiment of the present invention, a program for an information providing method for accessing recording means and providing information recorded on the recording means includes the steps of detecting an oldness standard indicating oldness of the information, and providing the information to a user according to a setting based on the detected oldness standard so that the user can perceive the oldness of the information.

According to still another embodiment of the present invention, a recording medium stores the above-described program.

Accordingly, the information providing method including the steps of detecting an oldness standard indicating oldness of the information, and providing the information to a user according to a setting based on the detected oldness standard so that the user can perceive the oldness of the information allows the information to be provided so that older information according to the oldness standard is perceived to be older, and enables the user to intuitively perceive the oldness of the information.

Further, the information providing apparatus, the program for the information providing method, and the recording medium storing the program for the information providing method also enable the user to intuitively perceive the oldness of the information.

Therefore, the user is able to intuitively perceive oldness of information.
Fig. 1 is a flowchart showing a processing procedure for a CPU in a computer according to a first embodiment of the present invention;
Fig. 2 is a block diagram showing a structure of the computer according to the first embodiment of the present invention;
Fig. 3 is a plan view of a display screen showing exemplary thumbnail images according to the process shown in Fig. 1;
Fig. 4 is a functional block diagram showing the functions implemented by the process shown in Fig. 1;
Fig. 5 is a plan view of a display screen showing processing results obtained by a computer according to a second embodiment of the present invention;
Fig. 6 is a plan view of a display screen showing processing results obtained by a computer according to a third embodiment of the present invention;
Fig. 7 is a block diagram showing a structure of an optical disk device according to a sixth embodiment of the present invention;
Fig. 8 is a plan view of a display screen of the optical disk device shown in Fig. 7 showing exemplary titles of television programs;
Figs. 9A to 9C are plan views of display screens of an optical disk device according to a seventh embodiment of the present invention; and
Fig. 10 is a block diagram of recording and playback apparatus for a music file according to an eleventh embodiment of the present invention.

The invention will now be described by way of example with reference to the accompanying drawings, throughout which like parts are referred to by like references, and in which:

### First Embodiment

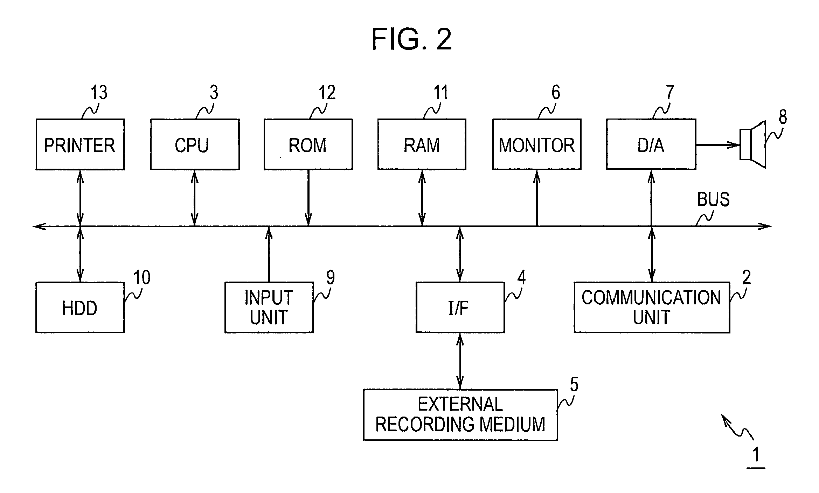

Fig. 2 is a block diagram of a computer 1 as an exemplary implementation of an information providing apparatus according to a first embodiment of the present invention. In the computer 1, a communication unit 2 accesses a network, such as the Internet, under the control of a central processing unit (CPU) 3 to transmit and receive various data to and from the network, and inputs and outputs the data from and to a bus BUS. Therefore, the computer 1 is adapted to obtain and send various programs and files associated with the computer 1.

In the computer 1, an interface (I/F) 4 accesses an external recording medium 5, such as a memory card or an optical disk, to record and play back various data onto and from the external recording medium 5 under the control of the CPU 3, and inputs and outputs the recorded and played back data from and to the bus BUS. Therefore, the computer 1 is adapted to obtain and output various programs and files associated with the computer 1 via various recording media. For example, the computer 1 obtains a still image file captured using an electronic still camera.

A monitor 6 is formed of a flat display device, such as a liquid crystal display panel, and displays various images processed by the computer 1 under the control of the CPU 3. A digital-to-analog (D/A) conversion circuit 7 performs digital-to-analog conversion on the audio data input via the bus BUS under the control of the CPU 3 to generate audio data, and drives a speaker 8 by the audio data. A printer 13 obtains and prints the image data output to the bus BUS under the control of the CPU 3. In the computer 1, therefore, the monitor 6, the D/A conversion circuit 7, the speaker 8, and the printer 13 form output means for outputting various content and processing results.

An input unit 9 detects a user operation using a keyboard, a mouse, or the like, and informs the CPU 3. A hard disk drive (HDD) 10 records various programs and data of various files obtained via the interface 4 or the communication unit 2, and plays back and outputs the data. The CPU 3 allocates a work area in a random access memory (RAM) 11 according to the recording of a read-only memory (ROM) 12, and executes various processing programs recorded on the HDD 10 according to a user instruction input via the input unit 9, thereby controlling the entire operation of the computer 1 to execute the process instructed by the user.

In the first embodiment, the processing programs for the operation of the CPU 3 include an application program (hereinafter referred to as an "image processing program") associated with the image files recorded on the HDD 10. The processing programs may be provided by pre-installing them in the computer 1 or downloading them via the network, such as the Internet. Alternatively, the processing programs may be provided via various recording media, such as optical disks, magnetic disks, and memory cards.

When the user instructs to start the image processing program via the input unit 9, the CPU 3 starts the application program to display a main menu on the monitor 6. A menu on the main menu is operated to download an image file recorded on the external recording medium 5 to the HDD 10 via the interface 4 to record the image file onto the HDD 10, or to download an image file from a homepage desired by the user via the communication unit 2 or from a computer specified by the user to record the image file onto the HDD 10. The image file recorded on the HDD 10 can also be uploaded to an external recording medium, a homepage, or an external computer.

In the processes, the CPU 3 displays a list of thumbnail images of image files that can be downloaded or uploaded according to a user instruction, and receives a user selection of an image file to be downloaded or uploaded. Further, one of the image files is previewed full-screen on the monitor 6. The image files recorded on the HDD 10 are also displayed in a list for a user selection of an image file to be processed, and one of the image files is previewed full-screen on the monitor 6.

When the user instructs an aging-change-based view mode in the list view, the CPU 3 detects an oldness standard based on the listed image files, and provides the thumbnail images and preview images of the image files to the user in such a manner that an older image file is perceived to be older according to the oldness standard.

The oldness standard is a standard that reflects the degree of oldness of target information. In the first embodiment, the oldness standard is selected between the file creation date and file recording date of the target image file. Instead of the file creation date or the file recording date, the file revision date may be used, or the average of the file creation date, the file recording date, and the file revision date or the average of any combination thereof may be used.

If the user selects the file creation date as the oldness standard, the target image files to be displayed are displayed so that the printed images degrade over a course of time using the file creation date as a starting point, whereby an image file captured longer ago can be perceived to be older. If the displaying based on the file recording date as the oldness standard is requested, the CPU 3 displays the target image files so that the printed images degrade over a course of time using as a starting point the file recording date when the files were recorded onto the HDD 10, the external recording medium 5, or a recording medium from which files are downloaded, whereby an image file recorded onto the HDD 10 or the like longer ago can be perceived to be older.

The aging-change-based view mode includes a relative-time-course view mode and an absolute-time-course view mode. When the user selects the relative-time-course view mode, the CPU 3 displays image files so that an image file captured or recorded longer ago is perceived to be older on the basis of the oldest file in the range of displayed image files specified by the user. The CPU 3 accepts the specification of the range of displayed image files in units of folders created in the HDD 10 or the like by searching file names or the like.

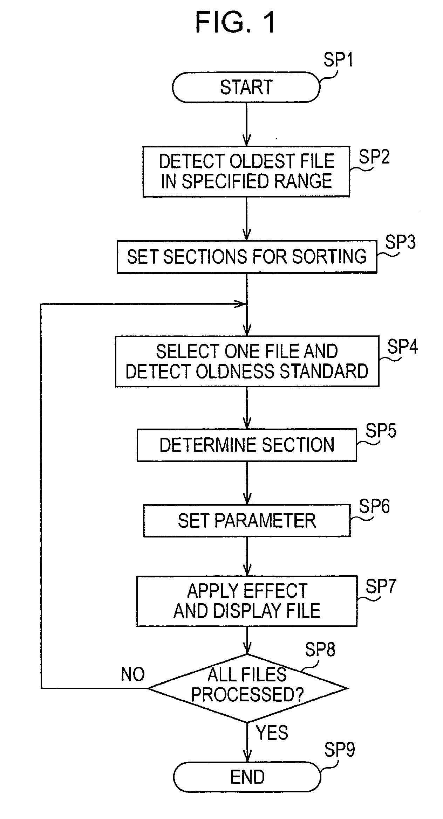

Fig. 1 is a flowchart showing a processing procedure of the CPU 3 in the relative-time-course aging-change-based view mode selected in the list view. When the user requests a list view in this view mode, the flow proceeds from step SP 1 to step SP2, and the CPU 3 detects the oldest image file according to the oldness standard in the range specified by the user. The CPU 3 detects the oldness standard by using a file management system associated with the image files displayed in the list view.

In step SP3, the CPU 3 divides a period from the starting point based on the oldness standard detected in step SP2 to the present into a predetermined number of sub-periods. The period from the starting point to the present may be equally divided into a predetermined number of sub-periods, or may be divided such that a specific sub-period has a longer or shorter duration according to a user instruction. The number of sub-periods may be specified by the user. For example, when the oldest file in the displayed image files specified by the user is a file captured 30 years ago, the CPU 3 divides the period from 30 years ago to the present, or a period of 30 years, into three sub-periods of 10 years, i.e., the period of 10 years from 30 years ago, which is the capturing date, the subsequent period of 10 years, and the period of 10 years to the present, and sorts the image files in these three sub-periods. Instead of the period to the present, the period to the file recording date or the like, which is the oldness standard, of the latest file may be divided.

In step SP4, the CPU 3 selects a file to be displayed at the top, and detects the oldness standard of the selected file by using the file management system. In step SP5, the sub-period in which the current image file is sorted is determined. In step SP6, a parameter of an effect for giving an old feeling according to the sub-period determined in step SP5 is set.

The effect for giving an old feeling is specified in advance by the user from a plurality of effects. The effect allows the user to perceive a degradation of the content of a file to be processed. In the first embodiment, the file to be processed is an image file, and an effect for allowing the user to perceive a degradation in image quality of the image file stored in the form of a print is employed. Specifically, when images are stored in the form of prints, the prints fade away and the paper is discolored over time. Thus, an effect for giving such a fading or discolored feeling is employed. More specifically, a monotone process for reducing the degree of color saturation to create a so-called "monotone" image, a sepia process for reducing the degree of color saturation and changing to a yellowish hue to create a so-called "sepia" image, a process for reducing the resolution, a process for reducing the number of gray levels, or the like is employed. A combination thereof may be employed.

In step SP6, the CPU 3 sets the parameter of the effect specified in advance by the user in the manner described above. In step SP7, the CPU 3 performs the effect on the thumbnail image to be displayed according to the parameter, and displays the resulting thumbnail image on the monitor 6. In step SP8, it is determined whether or not all image files have been processed. If a negative result is obtained, then, in step SP4, the subsequent image file is selected. If an affirmative result is obtained in step SP8, then, in step SP9, the processing procedure ends.

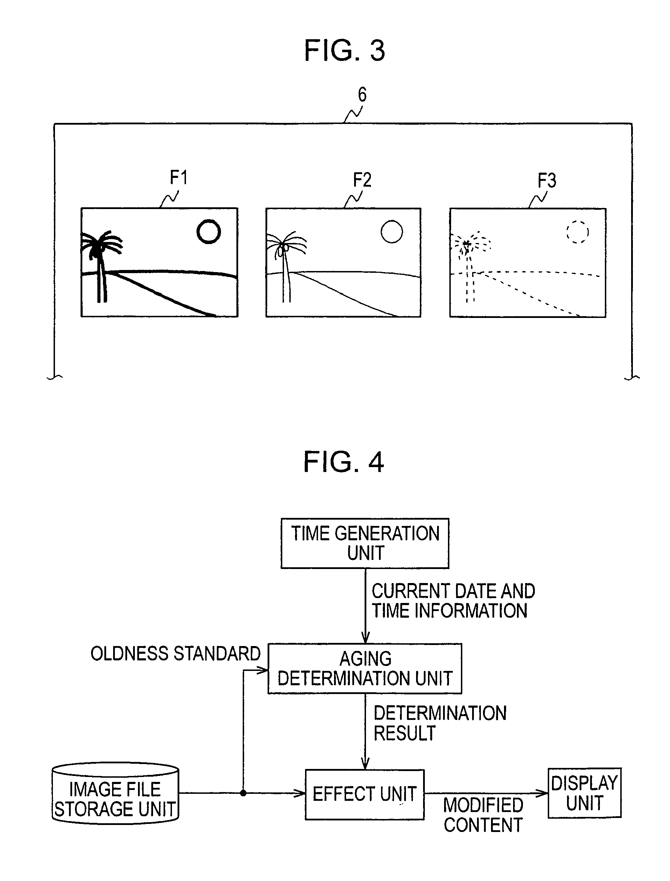

When an old feeling is given using the sepia process according to the three-section sorting described above, referring to Fig. 3, thumbnail images F1 to F3 of image files sorted in the most recent period, the subsequent period, and the oldest period, respectively, are obtained. As shown in Fig. 3, the CPU 3 displays the thumbnail image F1 without applying any effect to the image file sorted in the most recent period. For older image files, the parameter of the effect increases stepwise to display more sepia thumbnail images.

Instead of the sorting by dividing the period starting from the oldest image file to the present, sorts may be set based on the distribution of target files in these periods. For example, in the case of displaying 30 target files by three sorts, the files may be sorted so that each section is allocated 10 target files.

When the user selects one of the thumbnail images displayed in the list view and instructs to preview the selected image, the CPU 3 displays the preview image so as not to give an old feeling according to the parameter of the process performed on the thumbnail image according to the user setting.

When the user instructs the absolute-time-course aging-change-based view mode, the CPU 3 receives a user setting of sections for sorting. Likewise, the CPU 3 detects the oldness standard of each image file, determines the section in which the image file is sorted, provides a list view, and displays a preview image. In this case, for example, four sections each having a period of 10 years are defined. The sections may be defined retroactively in chronological sequence from the present to the past, or may be defined retroactively from the latest file to the past.

As shown in Fig. 4, the computer 1 includes a time generation unit that generates current date and time information using an internal timer, and an image file storage unit that stores image files in the HDD 10, the external recording medium 5, or a recording medium accessed by the communication unit 2. The computer 1 further includes a determination unit that determines the oldness standard based on the creation date or recording date of the content by the processing of the CPU 3, a function block of an effect unit that applies an effect to the content according to the parameter that is set according to a determination result of the determination unit, and a display unit that displays the modified content on the monitor 6. In a case where the parameter of the effect is set based on the latest image file instead of the present, the computer 1 does not include the function block of the time generation unit.

Further, the CPU 3 executes the image processing program to download, upload, or process the image file selected by the user in the list view or preview in the manner described above according to a user instruction. In response to a printing request from the user, the printer 13 prints the image file.

When the user instructs an aging-change-based printing mode, downloading, or uploading, as in the aging-change-based view mode described above, the CPU 3 detects the oldness standard of each image file, performs an effect process according to the parameter that is set according to the detected oldness standard, and prints, downloads, or uploads the resulting image file.

In the computer 1 having the structure described above, various application programs recorded on the HDD 10 are executed in response to user operations. When the user instructs to execute the image processing program, according to the user instruction, the computer 1 downloads an image file recorded on the external recording medium 5 to the HDD 10 via the interface 4 to record the image file onto the HDD 10, or downloads an image file from a homepage desired by the user via the communication unit 2 or from a computer specified by the user to record the image file onto the HDD 10. Alternatively, conversely, an image file recorded on the HDD 10 is uploaded to an external recording medium, a homepage, an external computer, or the like. Further, the image file recorded on such a medium is processed according to a user instruction.

According to a user instruction, the computer 1 displays a list of thumbnail images of the image files to be downloaded, uploaded, or processed, and previews an image file specified by the user in the list view. Therefore, the user is able to confirm a desired file to perform various types of processing.

Meanwhile, it is possible to store images of image files without degradation in quality as if images captured decades ago had been captured recently.

For example, in a list of a large number of scenic image files, it would be difficult to identify between an image file captured during the visit in the past and an image file captured during the recent visit. After the lapse of many years, the user who desires to select a photograph of his/her child would, by mistake, select a photograph of grandparent's childhood.

In order to avoid such inconvenience, it is conceivable to confirm the file creation dates of the individual files, in which case it is necessary to repeat a time-consuming operation to find a desired image file.

In the first embodiment, however, the oldness standard is detected based on the file creation date, which is the capturing date, according to a user setting, and an effect process is performed according to the parameter that is set according to the period from the starting point based on the oldness standard to the present, thereby displaying thumbnail images so that the thumbnail image of an image file captured longer ago is perceived to be older. The user is therefore able to intuitively perceive the oldness through visual associative memory.

Further, in the first embodiment, the period from the starting point to the present is divided into sub-periods, and the parameters are set according to the divided sub-periods to display thumbnail images so that the thumbnail images of older images look gradually older. In the first embodiment, therefore, in the case of performing such an effect process for giving an old appearance to display images, it is possible to prevent the user from being confused as to which image is older in the images whose capturing dates or recording dates are close, whereby the user can also intuitively perceive the oldness.

Also, in the case of previewing an image selected from a list of thumbnail images, an effect process for giving an old appearance is performed to display the image so that older images look gradually older, thus preventing the user from feeling the difference or being confused between the list view and the previews. Therefore, the user is able to intuitively perceive the oldness.

Also, in a case where the user submits a printing request in the display view, according to a user instruction, an effect process for giving an old appearance over the course of time from the starting point based on the oldness standard is performed on an image, and the resulting image is printed. Therefore, in the case of printed and managing an image of a desired image file, the user is also able to intuitively perceive the oldness.

The process described above is performed an image file to be uploaded or downloaded, thus enabling the user to intuitively perceive the oldness of the uploaded or downloaded image file.

The image files may be obtained not only by capturing them using an electronic still camera but also by downloading them from a homepage. In this case, it is difficult to determine when an image file was downloaded.

In the first embodiment, instead of the oldness standard based on the file creation date, the file recording date at which an image file was recorded onto the HDD 10 or the like is used as the oldness standard, and the thumbnail image and the preview image are displayed so as to give an old feeling according to the parameter that is set according to the oldness standard. Further, an image file to be uploaded, downloaded, or printed is also subjected to an effect that gives an old feeling according to a user instruction.

The user is thus able to intuitively know an old image of an image file to be downloaded or the like. A selection from the list of thumbnail images ensures easy processing of operations, such as deletion. In the first embodiment, therefore, an improvement in user-friendliness is achieved.

Accordingly, in the computer 1, oldness standards are sorted according to the relative time course from the starting point based on the oldness standards or the absolute time course from the starting point based on the oldness standards, and parameters are set. Further, the oldness standards are sorted in various ways according to these types of time course. Therefore, the user is able to set a variety of old appearances to select and process an image file, and a further improvement in user-friendliness is achieved.

In the first embodiment, instead of using the file creation date or the file recording date, the file revision date may be used as the oldness standard to perform similar processes. Thus, for example, for an image file revised in the past, the user is able to intuitively perceive the oldness based on the revision date.

With the structure described above, an oldness standard indicating the oldness of information is detected based on the file creation date or the like, and information is provided to the user so that older information is perceived to be older according to the oldness standard, thus enabling user to intuitively perceive the oldness of the information. This ensures that the user is able to easily find the desired information.

Further, in the first embodiment, the information is image file information, and an effect is applied to an image file according to a parameter that is set so that an older image file degrades in quality, thus enabling the user to intuitively perceive the oldness.

The image files are provided by displaying a list of images of a plurality of image files. This ensures that the user is able to easily search for the desired file from a large number of image files.

Since the file creation date, the file recording date, or the file revision date is used as the oldness standard, the user is able to intuitively perceive the oldness of a file captured using an electronic still camera, a file obtained from a homepage, or a file once revised depending on the file source.

### Second Embodiment

In a second embodiment of the present invention, icons of various files and folders are subjected to an effect according to the parameter that is set according to the oldness standard, and are displayed so that the icon of an older file or folder looks older. The second embodiment is configured in the same manner as the first embodiment, except for the use of icons and the relevant processing. Thus, the second embodiment will be described in connection with the structure shown in Fig. 2 discussed above with respect to the first embodiment.

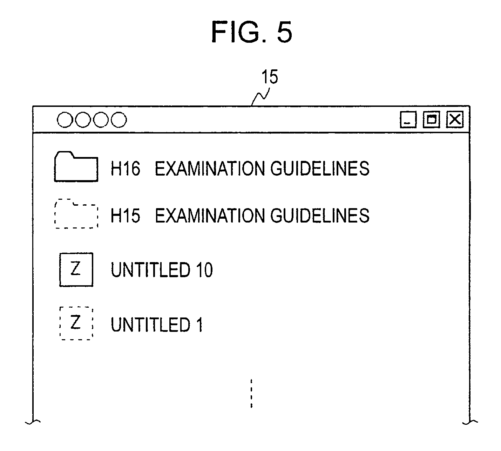

In the computer 1 according to the second embodiment, when the user instructs to display the content of a folder, the CPU 3 obtains the names of sub-folders and the names of files belonging to the folder by using the file management system, and displays them in a list view 15 shown in Fig. 5. The files are displayed by icons associated with application programs of the respective files.

In this process, the CPU 3 sets the creation date of the folders and files as the oldness standard, and performs an effect on the image data of the icons according to the parameter that is set according to the relative time course based on the oldest file in the files to be processed or the absolute time course to the present so that the icon of an older folder or file looks older. The oldness standard of each file may be based on, instead of the file creation date, the file recording date or the file revision date, the average thereof, or the average of any combination thereof. The oldness standard of each folder may be based on the oldness standard of the oldest file in the files belonging to the folder or the average of the oldness standards of the plurality of files belonging to the folder, or the process for giving an old feeling may be omitted according to a user instruction. When the oldness standard of each folder is based on the oldness standard of the oldest file in the files belonging to the folder, it can be confirmed that at least an old file exists in the folder. When the oldness standard of each folder is based on the oldness standard of the latest file in the files belonging to the folder, it can be confirmed that at least a new file exists in the folder. Therefore, the user is able to quickly find the desired file.

The effects that allow the icons to look old include a process for creating a so-called "monotone" image, a process for reducing the resolution, a process for reducing the number of gray levels, a process for allowing the icon of an older file to look darker by reducing the overall brightness, a process for allowing the icon of an older file to look thinner by increasing the overall brightness to the background, and so forth.

In the second embodiment, therefore, the user is also able to intuitively perceive oldness in the icon-based view of folders and files.

### Third Embodiment

A third embodiment of the present invention relates to an arrangement for displaying search results on a homepage that provides a search service, and allows the search results to be processed and displayed so that a search result with an older update looks older according to a time course using the update date as the oldness standard. The third embodiment is configured in the same as the first embodiment, except for the displaying of search results, and the third embodiment will be described in connection with the structure shown in Fig. 2 discussed above with respect to the first embodiment.

In the computer 1 according to the third embodiment, the CPU 3 starts up a browser according to a user instruction, and visits a homepage that provides a search service under the control of the communication unit 2. The computer 1 displays the homepage to receive a user input of various search conditions, such as keywords, and transmits the search conditions to the homepage to submit a search request. Search results provided by the homepage are displayed on the monitor 6.

The search-service providing homepage accesses homepages on the Internet through a search robot or an operator to detect the search keywords, and updates the record of the database with the detection results. In response to the search request, the homepage accesses the database by the search conditions, such as keywords, to obtain search results, and sends the search results to the computer 1.

The CPU 3 displays the sent search results by using the update date of the search results as a starting point and processing and displaying the search results so that a search result with an older update looks older according to the relative time course from the oldest update file in units of pages of the search results to the present or the absolute time course to the present.

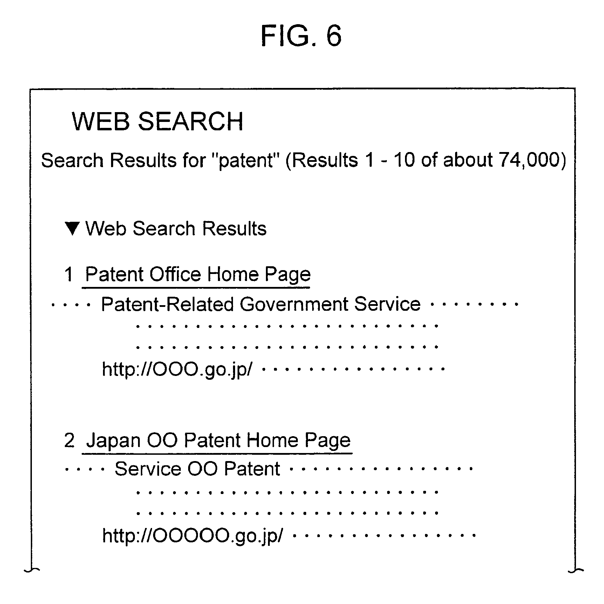

Specifically, as shown in Fig. 6, in the case of displaying search results for homepages by means of a web search tool, the titles of the homepages, the text of the content, and the uniform resource locators (URLs) of the homepages are displayed according to the history record in such a manner that the title of a previously visited homepage is displayed in purple color and the title of a new, or unvisited, homepage is displayed in blue color. The CPU 3 displays the search results so as to give an old feeling by performing an effect on the displayed image data in the search results in the manner described above in the first and second embodiments or changing the color or font of the displayed characters. The color may be changed by displaying the title of an older update homepage by a more yellow color.

In the case of displaying search results of image files, as in the first embodiment, the images of the search results are displayed so that an older update image file is perceived to be older.

According to the third embodiment, search results on the Internet are displayed so that a search result with an older update looks older, thus enabling the user to intuitively perceive the oldness to ensure easy search of the desired homepage from the latest search results.

### Fourth Embodiment

In a fourth embodiment of the present invention, the process described above with respect to the third embodiment for displaying search results so that a search result with an older update looks older is performed by the server of the homepage that provides the search results. The computer of the server receives a request for search conditions together with a setting of giving an old feeling, and provides the search results according to the setting. When the user instructs to display the search results so that a search result with an older update looks older according to the relative time course, as in the first embodiment, the search results are sorted and processed based on the starting point of the oldest update result in the hit list of search results.

In the fourth embodiment, therefore, when the number of hit search results is too many to be displayed in one page, similar advantages to those described above with respect to the third embodiment can also be achieved.

### Fifth Embodiment

A fifth embodiment of the present invention relates to an arrangement for providing music files, and allows the music files to be processed and provided so that a older file according to a starting point based on the oldness standard is perceived to be older. The fifth embodiment is configured in the same manner as the first embodiment, except for the process for providing a music file, and the fifth embodiment will be described in connection with the structure shown in Fig. 2 discussed above with respect to the first embodiment.

In the computer 1 according to the fifth embodiment, the CPU 3 starts up an application program for playing back music according to a user instruction, and displays a menu screen according to the application program. A list of playable music files is displayed according to a user instruction on the menu screen to receive a user selection of a file to be played back.

In the list view, as in the second embodiment, according to a user instruction, the CPU 3 displays the music files so that the icon of an older file is perceived to be older. Further, a so-called intro playback is performed according to a user instruction to selectively play back the listed music files in turn for a certain period of time from the top to receive a user selection.

In the fifth embodiment, the CPU 3 analyzes each music file to detect attributes of the music file during downloading the music file to the HDD 10 or at any time after the downloading. The music files are classified into categories based on the detected attributes. Thus, the music files recorded on the HDD 10 are displayed category-by-category by means of special icons. The attributes detected in the analysis include the music tempo, the sound intensity level, the fundamental frequency, and the beat level, and the categories include techno-pop music, love songs, slow-tempo music, and other categories.

In the intro playback, according to a user setting, the CPU 3 processes audio data obtained by playing back the music files so that an older music file is perceived to be older, and outputs the resulting data from the speaker 8. The user specifies a process for giving an old feeling from a plurality of processes. The plurality of processes allow an older music file to be perceived with lower sound quality. Specifically, the plurality of processes include a process for decreasing the high frequency of an older music file, a process for generating white noise or scratching noise and increasing the amount of superimposed noise with respect to an older music file, a process for increasing wow and flutter with respect to an older music file, a process for nonlinearly correcting the amplitude of an older music file to increase the distortion, and other processes.

Besides the standards described above in the first embodiment, the recording date of the play of a music file, the era when the music song was a hit, or the like may be set as the oldness standard according to the user setting. When the recording date or the hit era is set as the oldness standard, the CPU 3 obtains such information relating to a music file recorded on the HDD 10 from track information recorded on the HDD 10 or by accessing the Internet via the communication unit 2. The information relating to a music file obtained from the Internet or a music file via an external recording medium is obtained from the corresponding homepage or the recording on the external recording medium.

The user is therefore able to intuitively perceive the oldness at the time of selecting a song by means of intro playback and to select the desired song.

When the user selects target music files to be played back in this way, according to a user instruction, the CPU 3 processes audio data so that an older music file is perceived to be older, and sequentially plays back the target music files in a similar manner to the intro playback.

According to the fifth embodiment, in the case of processing music files, the parameter of the effect is set so that an older music file decreases in sound quality, thus enabling the user to intuitively perceive the oldness to search for the desired music file. Further, in selecting a music file by means of the intuitive perception, it is possible to comfortably provide the music file.

### Sixth Embodiment

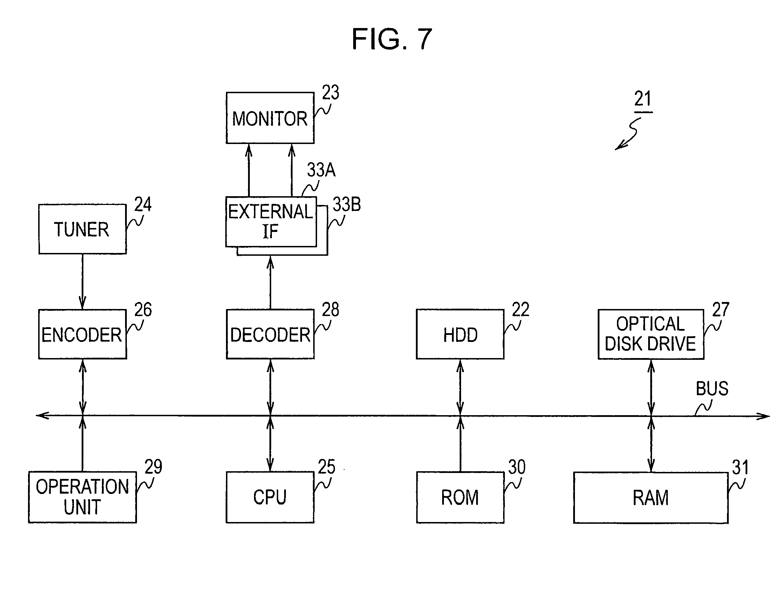

Fig. 7 is a block diagram of an optical disk device 21 according to a sixth embodiment of the present invention. The optical disk device 21 records a television broadcast program onto an HDD 22 or an optical disk by means of a moving-image file, and plays back and outputs the files recorded on the HDD 22 or the optical disk to a monitor 23.

In the optical disk device 21, a tuner 24 receives a television broadcast under the control of a CPU 25, and outputs video data and audio data. An encoder 26 compresses the video data and audio data output from the tuner 24, and outputs the compressed data to a bus BUS. The HDD 22 switches the operation under the control of the CPU 25, and records the compressed video data and audio data output to the bus BUS or plays back and outputs the recorded video data and audio data to the bus BUS. An optical disk drive 27 switches the operation under the control of the CPU 25, and records the compressed video data and audio data output to the bus BUS onto an optical disk or plays back and outputs the video data and audio data recorded on the optical disk to the bus BUS. A decoder 28 decodes and outputs the video data and audio data output to the bus BUS from the HDD 22 or the optical disk drive 27. External interfaces (external IFs) 33A and 33B start the operation under the control of the CPU 25, and output the video data and audio data output in the respective predetermined formats from the decoder 28 to the monitor 23. Therefore, the optical disk device 21 is adapted to receive and record a television broadcast program onto the HDD 22 or an optical disk, or to duplicate the program recorded on the HDD 22 to the optical disk, and is also adapted to monitor the program recorded on the HDD 22 or the optical disk by the monitor 23.

An operation unit 29 detects a user operation via a hander or a remote commander, and informs the CPU 25. The CPU 25 allocates a work area in a RAM 31, and executes a processing program recorded in a ROM 30 to control the operation of the respective components in response to a user operation obtained via the operation unit 29, thereby controlling the entire operation of the optical disk device 21. The program for the operation of the CPU 25 may be provided by downloading it via a network, such as the Internet, or via a recording medium, such as an optical disk, a magnetic disk, or a memory card.

When the user instructs to record a program, the CPU 25 starts the operation of the tuner 24, and instructs the HDD 22 or the optical disk drive 27 to record the resulting video and audio data. The CPU 25 also obtains the recording start date and time, the title of the program, the name of the broadcast station, etc., from, for example, an electronic program guide (EPG), and records them together with the video and audio data. Further, the CPU 25 analyzes the moving-image file of the recorded program to detect the title portion during recording the program or at any time, and records the thumbnail image of the detected title portion onto the HDD 22 or the optical disk drive 27.

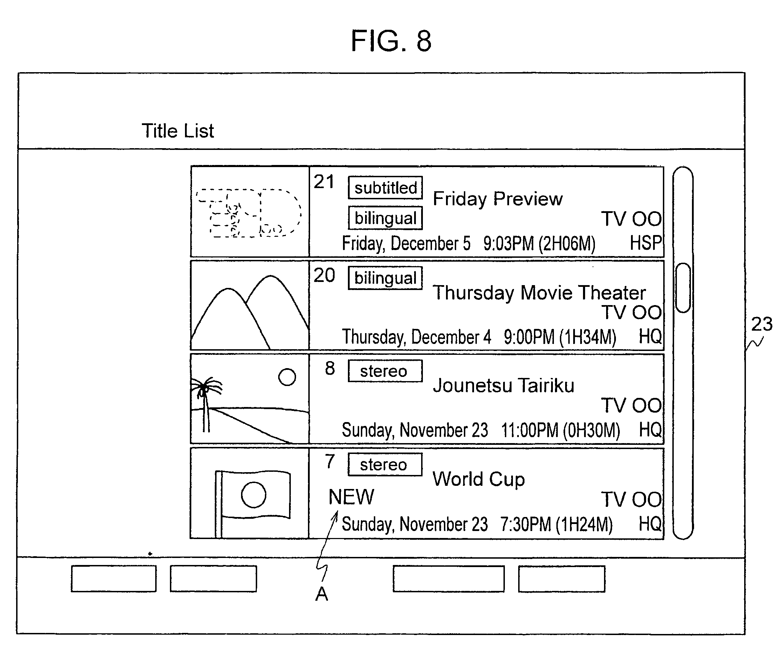

When the user instructs to play back or duplicate the program, moving-image files that can be played back or duplicated are displayed in a title list on the monitor 23. Fig. 8 is a plan view of the monitor 23 on which the title list is displayed, showing thumbnail images of the moving-image files, the program titles, and the broadcast station names in a scrollable manner.

In this view, the CPU 25 performs an effect that allows an older moving-image file to be perceived to be older on the thumbnail images in a similar manner to that for image files described above with respect to the first embodiment 1, and displays the resulting thumbnail images. A moving-image file that has not been played back is displayed with character "NEW", as indicated by reference symbol A, to help the user readily detect it. In the sixth embodiment, the program broadcast date is used as the oldness standard. The optical disk device 21 thus enables the user to intuitively know an old moving-image file in the listed moving-image files.

In the list view, when the user selects a moving-image file and submits a preview request, the CPU 25 plays back and displays the moving-image file selected by the user for a certain period of time from the scene being viewed in the thumbnail image on the monitor 23. Also, in this process, the CPU 25 processes video data obtained by playing back the moving-image file so that an older moving-image file is perceived to be older, and displays the resulting data on the monitor 23 according to a user setting. The user specifies a process giving an old feeling from a plurality of processes. The plurality of processes provide an older moving-image file with lower image quality, specifically, including, besides a process for directly applying the process used for image files described above with respect to the first embodiment to moving-image files, a process for superimposing noise in the vertical direction as if a scratch on the film were reproduced, a process for playing back a moving-image file in fast motion as if a film image with a small number of frames per second were reproduced, and a process for processing a moving-image file by an effect as if reception interference were occurring. The process for causing reception interference may be performed using, for example, ghost reproduction by delaying sampling values in the horizontal scanning direction so as to be added to the original sampling values, superposition of snow noise, superposition of pulse noise, beat reproduction by superimposing a specific frequency component, or a combination thereof.

According to the sixth embodiment, in the case of processing moving-image files, the parameter of the effect is set so that an older moving-image file is perceived to be older, thus enabling the user to intuitively perceive the oldness to search for the desired moving-image file. An improvement in user-friendliness is achieved accordingly.

### Seventh Embodiment

A seventh embodiment of the present invention relates to an arrangement for processing moving-image files, and gives an old feeling according to angle-of-view and format settings, instead of by reducing the image quality. The optical disk device according to the seventh embodiment has the same structure as the optical disk device 21 according to the sixth embodiment, except that the setting for giving an old feeling differs, and the seventh embodiment will be described in connection with the structure shown in Fig. 7.

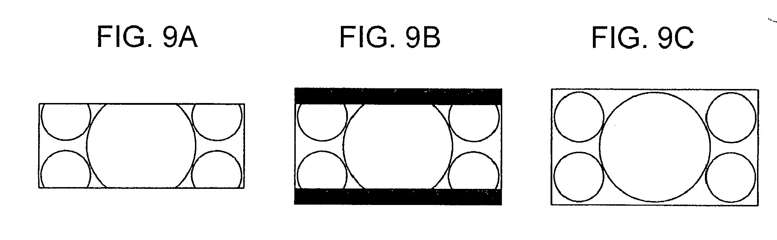

As shown in Fig. 9A, the CPU 25 displays a moving-image file sorted in the latest period based on the oldness standard as a thumbnail image with an angle of view of 14:9. As shown in Fig. 9B, a moving-image file sorted in the next latest period is displayed as a thumbnail image with an angle of view of 4:3 with black bands in the upper and lower parts of the image, i.e., so-called letter size. As shown in Fig. 9C, a moving-image file sorted in the old period is displayed with an angle of view of 4:3 in a different format from the format shown in Fig. 9B.

Further, a preview image is displayed on the monitor 23 according to similar angle of view and format settings. The process for giving an old feeling according to the setting of the angle of view may be applied only to the image file with an angle of view of 14:9. In this case, moving-image files received via digital terrestrial broadcasting, moving-image files of movies, etc., are employed.

A thumbnail image and a preview image may be displayed by additionally applying the effect for giving an old feeling, described above with respect to the sixth embodiment. Either the angle-of-view setting or the display format setting may be employed, or may be applied or added to the process for image files, described above with respect to the first embodiment.

According to the seventh embodiment, in the case of processing moving-image files, an old feeling is given according to the settings of the angle of view of an image and the display format, thus enabling the user to intuitively perceive oldness.

### Eighth Embodiment

In an eighth embodiment of the present invention, moving-image files are displayed so as to give an old feeling in a similar manner to that in the sixth or seventh embodiment, and a recommended moving-image file is displayed with a less old feeling. The optical disk device according to the eighth embodiment has the same structure as the optical disk device 21 according to the sixth or seventh embodiment, except that the setting for giving an old feeling differs, and the eighth embodiment will be described in connection with the structure shown in Fig. 7.

The CPU 25 determines which type of moving image the user tends to record or play back from various types of information obtained from an EPG to detect personal taste or preference of the user. Information for determining the taste or preference of the user is also recorded for each moving-image file recorded on the HDD 22. When moving-image files is displayed in a list view according to a user instruction, the degree to which each of the target moving-image files to be displayed meets the taste or preference of the user is detected using the detected taste or preference of the user.

Specifically, for example, when the user frequently records and plays back dramas and frequently records and plays back programs in which a specified actor appears, the degree to which a moving-image file of a drama in which the specified actor appears meets the taste or preference is set to the highest value, and the degree to which a moving-image file of a non-drama program in which the specified actor appears or a moving-image file of a drama in which the specified actor does not appear meets the taste or preference is set to a low value. The degree to which a moving-image file of a non-drama program in which the specified actor does not appear meets the taste or preference is set to a lower value.

The CPU 25 corrects the oldness standard values of moving-image files according to the value of the thus detected degree of meeting the taste or preference, and then sets the parameter of an effect according to the sorting. The CPU 25 thus sets a moving-image file meeting the taste or preference of the user to a recommended moving-image file, and the recommended moving-image file is displayed with a less old feeling.

The taste or preference of the user may be input by the user. The process for reducing the old feeling for the recommended moving-image file may be performed for displaying various files, such as moving-image files and music files.

According to the eighth embodiment, therefore, it is possible to give an old feeling through associative memory and to reflect the taste or preference of the user in the associative memory. This ensures that the user is able to more easily search for the desired file.

### Ninth Embodiment

In a ninth embodiment of the present invention, the number of times playback is repeated is taken into consideration to give an old feeling. The optical disk device according to the ninth embodiment has the same structure as the optical disk device 21 according to the sixth or seventh embodiment, except that the arrangement relating to the oldness standard differs, and the ninth embodiment will be described in connection with the structure shown in Fig. 7.

Video content may repeatedly be played back; however, playback is mostly repeated several times.

The CPU 25 records the number of times playback of each moving-image file is repeated onto the HDD 22, and only the thumbnail image of a moving-image file that is played back a number of times corresponding to a predetermined number or more is picked up from the thumbnail images to be displayed in a list view, and is subjected to the effect described above with respect to the sixth or seventh embodiment according to the oldness standard.

The limitation in the number of times playback is repeated may be applied to other content, such as music. The oldness standard may be based on the last time the file was played back or the time of playback corresponding to the predetermined number of times.

According to the ninth embodiment, therefore, moving-image files having less possibility of being repeatedly played back more than a predetermined number of times playback is repeated are displayed so that an older video file is perceived to be older, which is useful for content management.

### Tenth Embodiment

In a tenth embodiment of the present invention, transmission lines are switched to give an old feeling. The optical disk device according to the tenth embodiment has the same structure as the optical disk device 21 shown in Fig. 7, except that the arrangement for switching transmission lines differs, and the tenth embodiment will be described in connection with the structure shown in Fig. 7.

In the optical disk device 21, the external interfaces 33A and 33B have different transmission qualities, and are equipped with, for example, analog component output, so-called S-terminal analog composite output, to output video data.

The CPU 25 determines whether or not both the external interfaces 33A and 33B are available for the monitor 23 connected to the optical disk device 21. If both the external interfaces 33A and 33B are available, in the preview process or the following playback process, the external interface 33A or 33B is selected according to the oldness standard to output the video data. Specifically, for a moving-image file sorted in an old period, the video data is output via the transmission line in the external interface 33A with relatively lower transmission quality. Conversely, for a moving-image file sorted in a new period, the video data is output via the transmission line in the external interface 33B with relatively higher transmission quality.

The transmission lines may be implemented by a variety of interface or format transmission lines, such as high-definition multimedia interface (HDMI) lines. Switching the transmission lines may also be performed for processing music files. In this case, typical analog-signal transmission lines, such as S/PDIF (Sony/Philips Digital Interface Format) lines and H.A.T.S (High Quality Digital Audio Transmission System) lines, may be used.

As in the tenth embodiment, the oldness standard is set by selecting a transmission line, thus enabling the user to intuitively perceive the oldness.

### Eleventh Embodiment

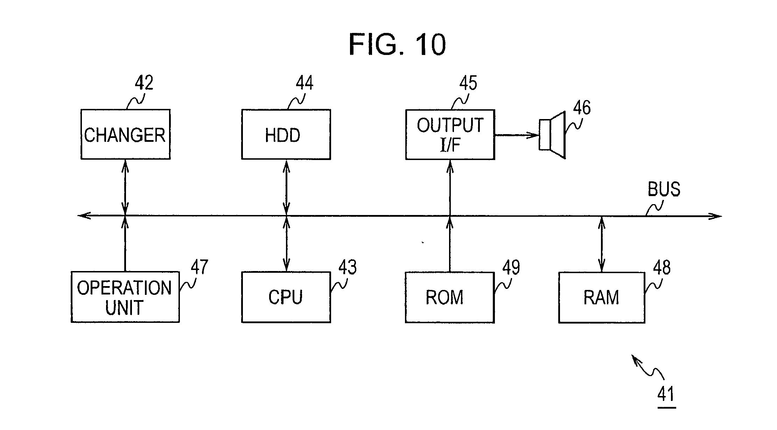

Fig. 10 is a block diagram of a recording and playback apparatus 41 for recording and playing back a music file according to an eleventh embodiment of the present invention. The recording and playback apparatus 41 holds optical disks of a plurality of formats in a playable manner, and selectively plays back the held optical disks in response to a user operation.

In the recording and playback apparatus 41, a changer 42 accommodates and holds a large number of optical disks, and selectively loads one of the held optical disks into an optical disk driver under the control of a CPU 43 to play back the optical disk. The changer 42 includes the optical disk driver capable of playing back a compact-disc optical disk, a Super Audio CD (SACD) optical disk, and a hybrid SACD optical disk. SACD is an optical disk for providing higher quality audio playback than the compact disc. A hybrid SACD optical disk is an optical disk for allowing the user to select a playback format from a plurality of formats. The hybrid SACD disk has an information recording surface that is divided into two portions, i.e., the inner and outer circumferential portions, and the inner and outer circumferential portions support the typical compact disc format and the SACD format so that the desired music file can selectively be played back with the sound quality achieved by the typical compact disc or the sound quality achieved by the SACD disk.

When an optical disk is received, the changer 42 detects the type of the optical disk, and informs the CPU 43. When a hybrid SACD optical disk is to be played back, the changer 42 plays back the optical disk in the compact disc format or the SACD format under the control of the CPU 43 according to the disk type, and outputs audio data.

An HDD 44 records audio data obtained from an external device, etc., via an interface (not shown) or the audio data output from the changer 42, and plays back and outputs the recorded audio data. Therefore, the HDD 44 records and holds various content in the form of music files.

An output interface (output IF) 45 obtains audio data output to a bus BUS, and drives a speaker 46 by the audio data. An operation unit 47 detects a user operation, and informs the CPU 43. The CPU 43 allocates a work area in a RAM 48, and executes a processing program recorded in a ROM 49 to control the entire operation of the recording and playback apparatus 41. The program for the operation of the CPU 43 may be provided by downloading it via a network, such as the Internet, or via a recording medium, such as an optical disk, a magnetic disk, or a memory card.

When an optical disk is received in the changer 42, the CPU 43 executes the processing program to detect and record the type of the received optical disk onto the HDD 44. Further, an oldness standard is detected in a similar manner to that in the above-described embodiment for music files. When the optical disk to be played back is a hybrid SACD optical disk, the compact disc format is selected for a music file sorted in an old period according to the oldness standard to play back the music file from the optical disk, and the SACD format is selected for a music file sorted in a new period to play back the music file from the optical disk.

According to the eleventh embodiment, in the case of processing music files, the format in which a music file is played back is determined according to the oldness standard, thus enabling the user to intuitively perceive the oldness.

### Twelfth Embodiment

While, in the above-described embodiments, an oldness standard is detected based on information relating to the file operation, such as the file creation date or the file revision date, embodiments of the present invention are not limited thereto. The transmission format at the time of obtaining a file, the format of a recording medium, the encoding format, the format of copy guard protection, the file format, and the version of these formats may be recorded and held, and the oldness standard may be detected based on the recorded information. For example, DVD-RW version 1.0 is available for recording media sold in 1998 through 2000, and DVD-R version 1.0 is available for recording media sold in 1997 through 1998. Therefore, oldness of a file recorded on a recording medium can be determined based on the format of the recording medium. A variety of new formats and versions of the transmission format of data have been available. MPEG (Moving Picture Experts Group) 2, which is a data compression scheme for moving-image files, has been replaced by H.264/AVC (Advanced Video Coding). File extensions of files processed by the computer may be changed to reflect the updated version of the corresponding application program, and the files may be provided in the new format or version. Therefore, based on the transmission format, the format of a recording medium, the encoding format, the format of copy guard protection, the file format, and the version of these formats, the oldness standard of the corresponding file can be detected to process the file, whereby the user can intuitively perceive an old file.

While, in the second embodiment, the oldness of files belonging to a group is collectively displayed by setting the icon of a folder so as to give an old feeling, embodiments of the present invention are not limited thereto. For example, the optical disk device 21 shown in Fig. 7 or any recording and playback apparatus other than a computer may also collectively manage a plurality of films by using a folder, and the process for setting the icon of the folder, described above with respect to the second embodiment, can be employed. For example, when a plurality of external devices are connected to provide file information, this process can be performed on the icons indicating the devices instead of a folder.

While, in the above-described embodiments, files recorded on various recording media are processed, embodiments of the present invention are not limited thereto, and an index file for a plurality of files recorded on a recording medium may be processed. The index file is configured by extracting information recorded in a plurality of files to be processed and incorporating the extracted information together with the file names, the link information of the files, etc., into a file. In the case of processing the index file, an oldness standard may be detected according to the information recorded in this file.

While, in the above-described embodiments, files are sorted according to the oldness standard to determine the oldness, embodiments of the present invention are not limited thereto. The lapse of time from the oldness standard may be used to set the parameter by performing an arithmetic operation employing a linear function, a quadratic function, or the like so that the oldness successively changes.

While, in the above-described embodiments, the processes that allow an old file to simply look old are provided, embodiments of the present invention are not limited thereto. For example, when copy prohibition due to copy guard protection expires in due course, the setting of the oldness may be switched so that the copy-expired files can be identified from the copy-restricted files. In this case, when copy prohibition expires, the thumbnail image or the like of the corresponding file that has been displayed so as to look old may be displayed so as not to look old, or processes for giving an old feeling may be switched.

While the above-described embodiments have been discussed in the context of a computer, an optical disk device, and a recording and playback apparatus, embodiments of the present invention are not limited thereto, and a wide variety of devices for processing various files may be employed.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Whilst the embodiments described above each include explicitly recited combinations of features according to different aspects of the present invention, other embodiments are envisaged according to the general teaching of the invention, which include combinations of features as appropriate, other than those explicitly recited in the embodiments described above. Accordingly, it will be appreciated that different combinations of features of the appended independent and dependent claims form further aspects of the invention other than those, which are explicitly recited in the claims.

## Claims

1. An information providing method for accessing recording means and providing information recorded on the recording means, the information providing method comprising the steps of:
detecting an oldness standard indicating oldness of the information; and
providing the information to a user according to a setting based on the detected oldness standard so that the user can perceive the oldness of the information.

2. The information providing method according to Claim 1, wherein the information comprises image file information,
the step of providing the information includes the step of performing an effect process on an image file, and
in the step of providing the information, the setting based on the oldness standard includes a setting of a parameter of the effect process so that an older image file degrades in quality.

3. The information providing method according to Claim 2, wherein in the step of providing the information, images of a plurality of the image files are displayed in a list.

4. The information providing method according to Claim 1, wherein the information comprises image file information, and
in the step of providing the information, the setting based on the oldness standard includes a setting of at least an angle of view or a display format of an image of an image file.

5. The information providing method according to Claim 1, wherein the information comprises icon information for a file belonging to a folder or a file and folder belonging to a folder,
the step of providing the information includes the step of performing an effect process on an image of an icon, and
in the step of providing the information, the setting based on the oldness standard includes a setting of a parameter of the effect process so that the icon of an older file or folder degrades in quality.

6. The information providing method according to Claim 1, wherein the information comprises a search result provided by a search homepage located on a network, and
in the step of providing the information, the setting based on the oldness standard includes a setting of displaying the search result.

7. The information providing method according to Claim 1, wherein the information comprises a search result searched for using a search condition input via a network,
in the step of providing the information, the setting based on the oldness standard includes a setting of displaying the search result, and
in the step of providing the information, a device that specifies the search condition is set as a transmission destination, and the information is sent to the network.

8. The information providing method according to Claim 1, wherein the information comprises music file information,
the step of providing the information includes the step of performing an effect process on a music file, and
in the step of providing the information, the setting based on the oldness standard includes a setting of a parameter of the effect process so that an older music file degrades in quality.

9. The information providing method according to Claim 1, wherein the information comprises music file information, and
in the step of providing the information, the setting based on the oldness standard includes a setting of a format according to which a music file is played back.

10. The information providing method according to Claim 1, wherein the information comprises moving-image file information,
the step of providing the information includes the step of performing an effect process on a moving-image file, and
in the step of providing the information, the setting based on the oldness standard includes a setting of a parameter of the effect process so that an older moving-image file degrades in quality.

11. The information providing method according to Claim 1, wherein the information comprises moving-image file information, and
in the step of providing the information, the setting based on the oldness standard includes a setting of at least an angle of view or a display format of an image of a moving-image file.

12. The information providing method according to Claim 10, further comprising the step of detecting the degree of meeting taste or preference of the user,
wherein in the step of providing the information, the parameter of the effect process is corrected according to the degree of meeting the taste or preference of the user, and the moving-image file is processed.

13. The information providing method according to Claim 10, further comprising the step of detecting the number of times playback of the moving-image file is repeated,
wherein in the step of providing the information, only a moving-image file that is played back a number of times exceeding a predetermined number is processed so that the user can perceive the oldness of the information.

14. The information providing method according to Claim 1, wherein in the step of providing the information, the information is sent to one of transmission lines having multiple formats, and
in the step of providing the information, the setting based on the oldness standard includes a setting of the transmission line to which the information is sent.

15. The information providing method according to Claim 1, wherein the information comprises file information, and
the oldness standard comprises the file creation date of a file, the file recording date when the file is recorded onto a recording medium, or the file revision date of the file.

16. The information providing method according to Claim 1, wherein the information comprises a search result provided by a search homepage located on a network, and
the oldness standard comprises the date when the search result is updated on a database for the search.

17. The information providing method according to Claim 1, wherein the information comprises information recorded on a recording medium, and
in the step of detecting an oldness standard, the oldness standard is detected based on a format of the recording medium.

18. An information providing apparatus for accessing recording means and providing information recorded on the recording means, the information providing apparatus comprising:
a standard detecting unit that detects an oldness standard indicating oldness of the information; and
an information providing unit that provides the information to a user according to a setting based on the oldness standard detected by the standard detecting unit so that the user can perceive the oldness of the information.

19. A program for an information providing method for accessing recording means and providing information recorded on the recording means, the program comprising the steps of:
detecting an oldness standard indicating oldness of the information; and
providing the information to a user according to a setting based on the detected oldness standard so that the user can perceive the oldness of the information.

20. A recording medium storing the program according to Claim 19.
